# EUROPEAN PATENT SPECIFICATION

(11) **EP 1 615 130 B1**
(45) Date of publication and mention of the grant of the patent: **06.07.2016**
(21) Application number: 04104365.4
(22) Date of filing: 09.09.2004
(51) Int. Cl.: G06F 11/07, G06F 11/34, H04L 12/26

(54) **Dynamic Log for a computer system consisting of servers providing services**
Dynamische Protokollierung für ein Computersystem bestehend aus Dienstleistungsservern
Enregistrement dynamique d'informations pour un système informatique de serveurs fournissant des services

(30) Priority: 07.07.2004 EP 04015971
(43) Date of publication of application: 11.01.2006
(73) Proprietor: SAP SE, 69190 Walldorf (DE)
(72) Inventor: Becker, Wolfgang, 67069, Ludwigshafen (DE)
(74) Representative: Müller-Boré & Partner Patentanwälte PartG mbB

(56) References cited:
- EP-A- 1 338 928
- EP-A2- 0 952 521
- WO-A-03/107178
- US-A- 5 841 972
- US-A1- 2003 005 109

## Description

### Technical field

The present invention generally relates to the field of administrating a computer system of server and services and more particularly to providing entries in an administration log.

### Background art

A computer system of server and services consists of at least one server and of a plurality of services which are provided by the server. Frequently, one server provides one or more services. Another possibility is that different servers provide one service. A mixture of both types of relations within the system of server and services is also possible.

If the number of server and services of the system is large administration of the system is challenging and usually requires several persons. Frequently, different persons are responsible for administrating different aspects of the system of server and services. One aspect is administration of data which describe a setup of a server and which are specific for a server. A different aspect is administration of services which are application programs for end users. Such a situation in which different persons administrate different aspects of the system is typically encountered in large and medium sized enterprises.

For a system of server and services there is the problem of failed services or services operating in an unexpected way due to setup changes of the server. The problem is more complicated if the system is large and the administration of the server is not related to the administration of the services. In this case, the administrator responsible for the service does not have sufficient information to find the cause of the error. More specifically, it is difficult for him or her to relate the failed service to the relevant server setup changes.

WO 03/107178 A (D1) relates to managing a large number of servers and their server components distributed throughout a heterogeneous computing environment. An authenticated user, such as an IT administrator, can securely and simultaneously control and configure multiple servers, supporting different operating systems, through a virtual server.

### Disclosure of the invention

Accordingly, the object of the present invention is to provide a solution which allows tracking the cause of failed services to the relevant setup changes. This is solved by providing the relevant information about the server setup changes and by relating this information to the status of the services within one central log. If a service encounters a problem in the operation it is possible to search the central log for entries which regard the service and which describe a server setup change. Following this, the setup change data can be inspected in order to find the setup change which is responsible for the error.

In a first aspect of the present invention there is provided a method of administrating a system of at least one server and a plurality of services provided by the server. One step, of the method is receiving of input data which describe a setup change of the server of the system and which identify the server for which the setup is changed. Another step is determining the services which is affected by the setup change. This is done by analyzing relations between the server and services of the system. A relation defines for each service by which server it is provided.

Yet another step is the writing of the input data which identify the server, the identification of the determined service, and the input data describing the setup change into a log. The log is a tool for administrating the system of server and services and it provides the information to track a service failure to the responsible setup change of a server.

The information is split into two parts; the first part includes the identified server and determined services together with a navigation link to the second part; the second part contains the setup change data. The first part is written into a log entry. The second part can be accessed from the log entry using the navigation link.

Further aspects of the invention are a computer program comprising program instructions for causing a computer to perform the methods, a computer system performing the methods, and a computer readable medium for storing program instructions which cause a computer to perform the methods.

### Brief description of the drawings

Fig.1 is a flow diagram of a method of the invention.
Fig.2 displays an exemplary system of server and services.
Fig.3 illustrates a preferred way to write a log.
Fig.4 illustrates a further preferred way to write the log.
Fig.5 shows an example of a log with additional details.

### Mode(s) for carrying out the invention

The following detailed description describes exemplary embodiments and features of the present invention and does not limit the scope of the invention.

In a typical scenario, administration of the system of server and services includes administration of objects of different levels such as administration and maintenance of hardware of the server, operating systems of the server, system programs of the server, and application programs. Frequently, different administrators are responsible for administrating different levels of the system and their skill set is specialized to a level. However, objects of a level are usually influenced by objects of lower levels. This is the case for the level of services which depend on objects of other levels, wherein the term services is used for application programs which provide a service to end users and which depend on objects of other levels. In contrast to services, data describing a setup of a server are objects of the levels bellow the service level. Examples for services are application programs which provide information about the employees of a company or which plan a production process. Administration of services usually includes starting and stopping of the application programs and administration of users who have access to the individual services. Examples for data describing the setup of the server are system files and administration of the system files usually includes changing them.

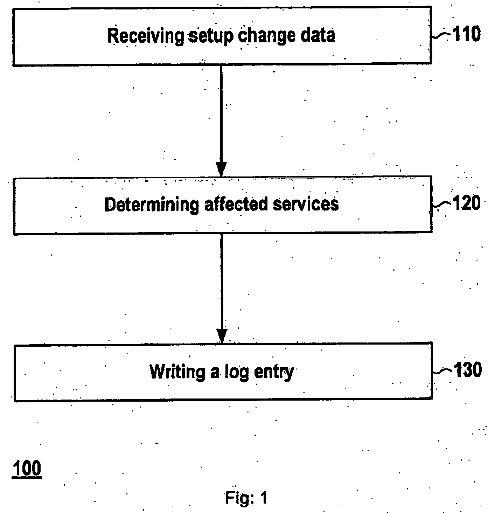

Details of the first aspect of the present invention are illustrated in Fig. 1-3 including elements like server, service, and log entry.

Fig.1 is a flow diagram which illustrates the steps of the first method of the invention. Starting from the receiving 110 of setup change data it continues with the next step of determining 120 the affected services and finishes with the writing 130 of a log entry. In a preferred embodiment for providing input data for the receiving step 110 a program is used for automatically detecting and identifying changes of system and configuration files of servers. Such changes are examples of server setup changes. A program of this kind can for example monitor the status of relevant files of a server and detect if any of them are changed. In case that a file is changed the change data can be created so that they include the file name, the file path, and the changed content of the file. The changed content can be described by specifying the position of the modified content in the file and stating for the modified content the version before the change and the version after the change. Such a description of the changed content is advantageous with regard to the size of the description, allows the identification of all changes, and provides the information required to take back any changes of the file. The monitoring program then automatically provides the change data together with the server identification as input data.

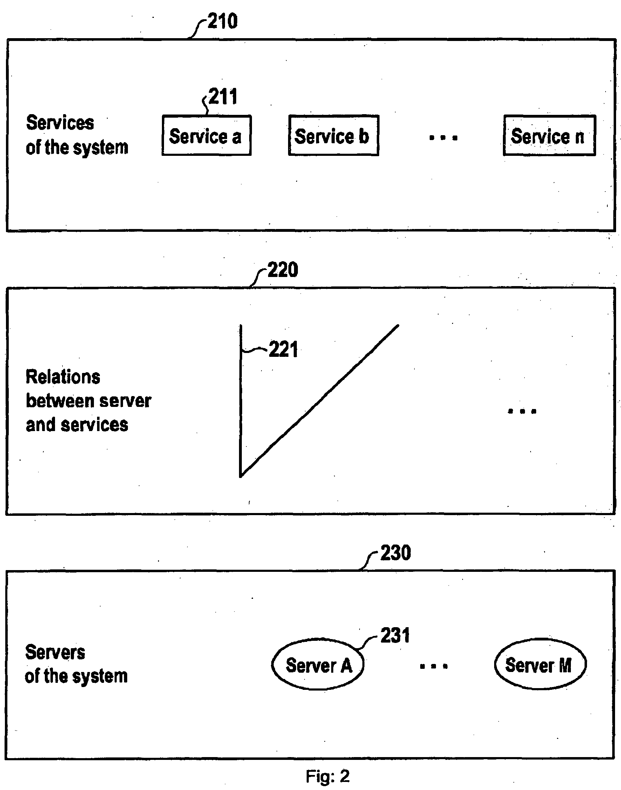

Fig.2 shows an example for a system of n services 210 and M servers 230. The relations 220 between the services and the servers define which service is running on which server. In the figure a single relation is depicted by a single line as it is the case for relation 221 between service a 211 and server A 231. The determining step 120 (Fig. 1) deterinines the service which is affected by the setup change by taking the server for which the change data have been received and by analyzing the relations between this server and the services. Assuming that only service a and service b are running on server A and on no other server it follows that changing the setup of server A affects service a and service b and no other service. In the embodiment a list is used with two columns. The first column is for server Identifications and the second column is for service identifications. Each entry in the list describes one relation between the server and the service. The determining step of the invention includes then searching the list for entries with a server identification which is identical with the received server identification and registering the service identifications of the found entries as the determined services.

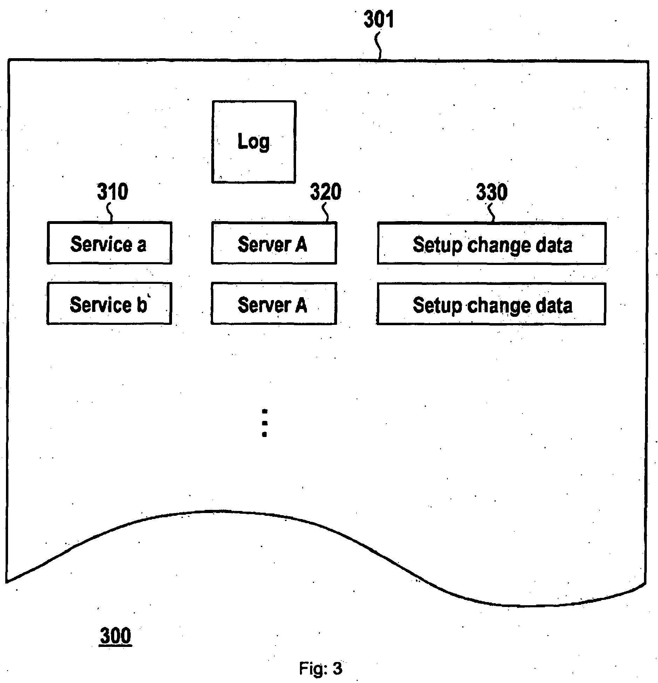

Fig.3 shows a log 301 with two entries resulting from writing step 130 with the minimal amount of information, i.e. the identification of the server 320 which was received in the input data, the determined service 310 affected by the change, and the setup change data 330 received in the input data.

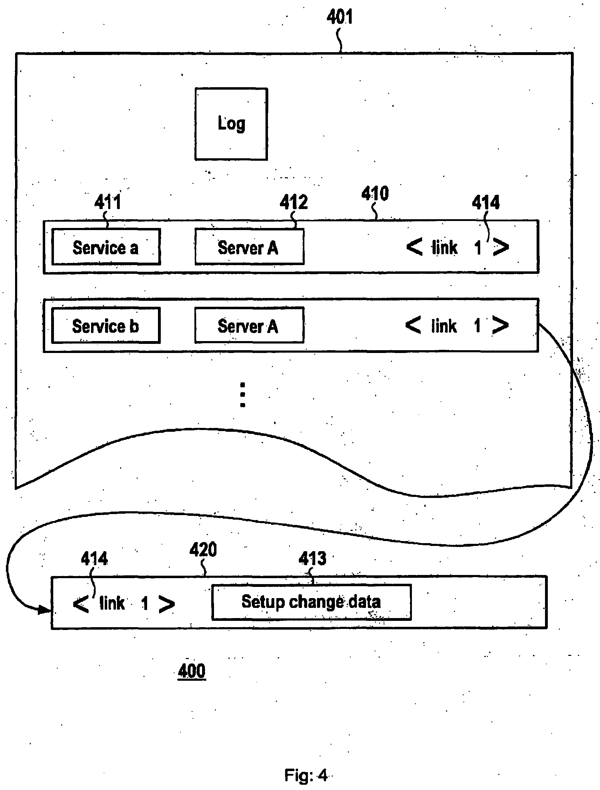

Fig.4 shows a log 401 with two entries resulting from the second aspect of the invention. The log entries include the received identification of a server 412, the identification of a determined service 411, and a navigation link 414 to a received setup change data 413. In this case the received change data for the log entry 410 are accessible by using the navigation link. In the embodiment the data 420 accessible with the navigation link are displayed in a separate window. The advantage of such a structure of the data is that the change data which can comprise a large amount of information are stored separately. This increases the clarity of the log entries. In addition to this, less memory has to be provided because the change data have to be stored only once even if there are two or more log entries for one setup change.

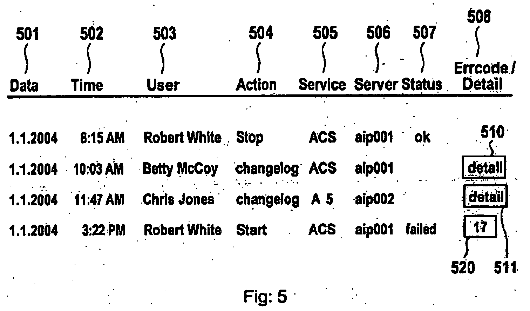

Fig.5 displays a concrete example of a log with 4 log entries. The log has 6 columns. First 2 columns 501 and 502 specify date and time when the log entry was written. A user column 503 specifies persons responsible for the change resulting in the log entry. Accordingly, an action column 504 specifies activities resulting in the log entry and service column 505 and server column 506 specify identities of affected server and services. A status column 507 specifies results of the activity of the log entry. In the present example the status is specified for log entries referring to a service activity. An Errcode/Detail column 508 specifies standard error codes of failed activities or provides links to change data. In the present embodiment the error codes are a link to access the explanation for the error code. The first entry describes an activity of stopping a service which has been initiated by a service administrator. The next two log entries have been written by an embodiment of the present invention and they describe two separate setup changes of different servers together with the affected services. Links 510 and 511 are used to access change data. The fourth entry describes a failure of an activity of a service. A tracking of the cause of the failure is now possible in the following way. In the fourth entry the error code 520 of the failed service indicates an error which results from a setup change of a server. Starting from the fourth entry the previous entry for the same service is searched. In the example it is the second entry.

Using the navigation link 510 of this entry it is possible for the administrator to access the setup change data and to investigate the setup change more closely and thus to check if the setup change causes the failure of the service.

In this example there is only one change entry for the failed service but it is also possible that there is more than one relevant change entry. Using the log entries in the described way it is generally possible to start from the failed service, to track the possible causes and to access the available information about the information. In this way the log provides an important tool for administrating a system of server and services.

## Claims

1. Method (100) of administrating a computer system of at least one server (230) and a plurality of services (210) provided by the server, the method comprising:
defining a list such that each entry in the list describes a relation between a server and a service by means of a server identification and a service identification;
receiving (110) input data which describe a setup change of a server and which identify the server for which the setup was changed;
determining (120) the services which are affected by the setup change by analyzing relations (220) between the server and services (210) of the system, wherein the relations (220) define which of the services (210) are running on the server,
- wherein the determining comprises searching the list for entries with a server identification which is identical to the received server identification and registering the service identifications of the found entries as the determined services;
splitting the input data into a first part and a second part,
- wherein the first part includes the server identification (412,506), the service identifications of the determined services (411,505) and a navigation link (414,508) to the second part,
- wherein the second part contains setup change data (413) that describes the setup change, wherein the setup change data (413) specifies the following for a changed file: a file name, a file path, and changed content of the changed file,
-- wherein the changed content is described by specifying a position of the changed content in the file, a version for the changed content before the setup change and a version for the changed content after the setup change;
writing (130) the first part of the input data into a central log (301/401), wherein the second part can be accessed from the first part using the navigation link;
wherein the central log (301/401) is used for administrating the system of server and services by inspecting the setup change data (413) in order to find the change which is responsible for an error,
wherein the central log (301/401) includes log entries describing setup changes of different servers together with affected services.

2. Method of claim 1, further comprising automatically determining and identifying changes of system and configuration files of the server (230) for providing input data.

3. Method of claim 2, wherein automatically determining and identifying changes of system and configuration files of the server (230) comprises monitoring the status of relevant files of the server (230).

4. Method of claim 1, whereas in step writing (130) date and time when the log entry was written is written into the central log (301/401).

5. Computer program comprising program instructions, which when executed, cause a computer to perform a method according to any one of claims 1 to 4.

6. Computer system configured to perform the method of any one of claims 1 to 4.

7. Computer readable medium storing program instructions which, when loaded on and executed by a computer system, cause said computer system to perform a method according to any one of claims 1 to 4.

## Patentansprüche

1. Verfahren (100) zum Verwalten eines Computersystems bestehend aus mindestens einem Server (230) und einer Vielzahl an Diensten (210), die vom Server bereitgestellt werden, wobei das Verfahren umfasst:
Definition einer Liste, so dass jeder Eintrag in der Liste eine Beziehung zwischen einem Server und einem Dienst durch eine Serveridentifikation und eine Dienstidentifikation beschreibt;
Empfang (110) von Eingabedaten, die eine Setupänderung eines Servers beschreiben und die den Server identifizieren, für den das Setup geändert wurde;
Ermitteln (120) der Dienste, die durch die Änderung des Setups betroffen sind, indem Beziehungen (220) zwischen dem Server und den Diensten (210) des Systems analysiert werden, wobei die Beziehungen (220) definieren, welche Dienste (210) auf dem Server ausgeführt werden,
- wobei das Ermitteln das Durchsuchen der Liste nach Einträgen mit einer Serveridentifikation, die identisch mit der empfangenen Serveridentifikation ist, und eine Eintragung der Dienstidentifikationen der gefundenen Einträge als die ermittelten Dienste umfasst;
Aufteilen der Eingabedaten in einen ersten und einen zweiten Teil,
- wobei der erste Teil die Serveridentifikation (412,506), die Dienstidentifikationen der ermittelten Dienste (411,505) und einen Navigationslink (414,508) zum zweiten Teil beinhaltet,
- wobei der zweite Teil Setupänderungsdaten (413) enthält, die die Setupänderung beschreiben, wobei die Setupänderungsdaten (413) Folgendes für eine geänderte Datei angeben: einen Dateinamen, einen Dateipfad, einen geänderten Inhalt der geänderten Datei,
- wobei der geänderte Inhalt beschrieben wird, indem eine Position des geänderten Inhalts in der Datei, eine Version für den geänderten Inhalt vor der Setupänderung und eine Version für den geänderten Inhalt nach der Setupänderung angegeben wird;
Schreiben (130) des ersten Teils der Eingabedaten in ein zentrales Protokoll (301/401), wobei vom ersten Teil mithilfe des Navigationslinks auf den zweiten Teil zugegriffen werden kann;
wobei das zentrale Protokoll (301/401) zum Verwalten des Systems bestehend aus Server und Diensten genutzt wird, indem die Setupänderungsdaten (413) geprüft werden, um die Änderung, die für einen Fehler verantwortlich ist, zu finden,
wobei das zentrale Protokoll (301/401) Protokolleinträge beinhaltet, die Setupänderungen verschiedener Server zusammen mit betroffenen Diensten beschre i-ben.

2. Verfahren nach Anspruch 1, zusätzlich das automatische Ermitteln und Identifizieren von Änderungen an System- und Konfigurationsdateien des Servers (230) zur Bereitstellung von Eingabedaten umfassend.

3. Verfahren nach Anspruch 2, wobei das automatische Ermitteln und Identifizieren von Änderungen an System- und Konfigurationsdateien des Servers (230) die Überwachung des Status relevanter Dateien des Servers (230) umfasst.

4. Verfahren nach Anspruch 1, wobei beim Schritt Schreiben (130) Datum und Zeit, wann der Protokolleintrag erstellt wurde, in das zentrale Protokoll (301/401) geschrieben werden.

5. Computerprogramm, das Programmbefehle enthält, die bei ihrer Ausführung den Computer dazu veranlassen, ein Verfahren nach einem der Ansprüche 1 bis 4 durchzuführen.

6. Computersystem, konfiguriert zum Durchführen des Verfahrens nach einem der Ansprüche 1 bis 4.

7. Vom Computer lesbarer Datenträger, der Programmbefehle speichert, die, wenn sie auf ein Computersystem geladen und von diesem ausgeführt werden, das Computersystem dazu veranlassen, ein Verfahren nach einem der Ansprüche 1 bis 4 durchzuführen.

## Revendications

1. Procédé (100) d'administration d'un système informatique d'au moins un serveur (230) et d'une pluralité de services (210) fournis par le serveur, le procédé comprenant :
définir une liste de sorte que chaque entrée dans la liste décrit une relation entre un serveur et un service au moyen d'une identification de serveur et d'une identification de service ;
recevoir (110) des données d'entrée qui décrivent un changement de configuration d'un serveur et qui identifient le serveur pour lequel la configuration a été changée ;
déterminer (120) les services qui sont affectés par le changement de configuration en analysant des relations (220) entre le serveur et des services (210) du système, dans lequel les relations (220) définissent quels services (210) tournent sur le serveur,
- dans lequel la détermination comprend chercher dans la liste des entrées avec une identification de serveur qui est identique à l'identification de serveur reçue et enregistrer les identifications de service des entrées trouvées comme les services déterminés ;
diviser les données d'entrée en une première partie et une seconde partie,
- dans lequel la première partie inclut l'identification de serveur (412, 506), les identifications de service des services déterminés (411, 505) et un lien de navigation (414, 508) vers la seconde partie,
- dans lequel la seconde partie contient des données de changement de configuration (413) qui décrivent le changement de configuration, dans lequel les données de changement de configuration (413) spécifient ce qui suit pour un fichier changé : un nom de fichier, un chemin d'accès de fichier et du contenu changé du fichier changé,
-- dans lequel le contenu changé est décrit en spécifiant une position du contenu changé dans le fichier, une version pour le contenu changé avant le changement de configuration et une version pour le contenu changé après le changement de configuration ;
écrire (130) la première partie des données d'entrée dans un journal central (301/401), dans lequel la seconde partie peut être accédée depuis la première partie en utilisant le lien de navigation ;
dans lequel le journal central (301/401) est utilisé pour administrer le système de serveur et de services en inspectant les données de changement de configuration (413) afin de trouver le changement qui est responsable d'une erreur,
dans lequel le journal central (301/401) inclut des entrées de journal décrivant des changements de configuration de différents serveurs avec des services affectés.

2. Procédé selon la revendication 1, comprenant en outre déterminer et identifier automatiquement des changements de système et de fichiers de configuration du serveur (230) pour fournir des données d'entrée.

3. Procédé selon la revendication 2, dans lequel déterminer et identifier automatiquement des changements de système et de fichiers de configuration du serveur (230) comprend surveiller le statut de fichiers pertinents du serveur (230).

4. Procédé selon la revendication 1, dans lequel, dans l'étape d'écriture (130), la date et l'heure à laquelle l'entrée de journal a été écrite sont écrites dans le journal central (301/401).

5. Programme informatique comprenant des instructions de programme qui, lors de leur exécution, amènent un ordinateur à réaliser un procédé selon l'une quelconque des revendications 1 à 4.

6. Système informatique configuré pour réaliser le procédé selon l'une quelconque des revendications 1 à 4.

7. Support lisible par ordinateur stockant des instructions de programme qui, lors de leur chargement sur et exécution par un système informatique, amènent ledit système informatique à réaliser un procédé selon l'une quelconque des revendications 1 à 4.
